# EUROPEAN PATENT APPLICATION

(11) **EP 1 524 641 A1**
(43) Date of publication of application: **20.04.2005**
(21) Application number: 04024512.8
(22) Date of filing: 14.10.2004
(51) Int. Cl.: G09G 3/20, G09G 3/36

(54) **Display device and driving method thereof**

(30) Priority: 16.10.2003 KR 2003072093
(71) Applicant: Samsung Electronics Co., Ltd., Suwon-si, Gyeonggi-do (KR)
(72) Inventor: Roh, Nam-Seok Hyojachon Hwasung Apt., Seongnam-si Gyeonggi-do (KR); Hong, Mun-Pyo Hansol Maeul Cheonggu Apt., Seongnam-si Gyeonggi-do (KR)
(74) Representative: Modiano, Guido, Dr.-Ing.

(57) **Abstract**

A display device is provided, which includes: a signal controller that processes input image signals from an external device depending on a characteristic of the input image signals; a data driver generating data signals corresponding to the processed image signals; and a display panel displaying images based on the data signals and including a plurality of pixels that are arranged in a matrix.

## Description

### BACKGROUND OF THE INVENTION

### (a) Field of the Invention

The present invention relates to a display device and a driving method thereof.

### (b) Description of Related Art

A liquid crystal display (LCD) includes a pair of panels provided with field generating electrodes and a liquid crystal (LC) layer with dielectric anisotropy, which is disposed between the two panels. The LC layer is supplied with electric field, and the transmittance of light passing through the LC layer is adjusted by controlling the electric field, thereby obtaining desired images.

The LCD is used for a monitor of a computer or TV including a TV tuner for displaying images corresponding to broadcasting signals.

The display devices such as LCDs, organic light emitting displays (OLEDs), and plasma display panels (PDPs) used for TV have fixed number of pixels and a resolution of 640×480 (VGA), 1024×768 (XGA), 1280×1024 (SXGA), 1920×1080, etc. The resolution of the display device for TV is selected depending on the standards of broadcasting signals. For example, the VGA display device is suitable for analog NTSC broadcasting signals and the XGA or SXGA display device is suitable for HDTV broadcasting signals.

Generally, a digital TV includes a scaler chip mounted on a system board for scaling input video signals. The scaling is to convert the input video signals into output video signals satisfying output standard for a display device depending on the information of the vertical frequency, the resolution, or the aspect ratio represented by the input image signals. For example, when analog broadcasting signals, SD (standard definition) broadcasting signals, and HD (high definition) broadcasting signals are coexistent, the scaling may be required for displaying images with different resolutions. In other words, the scaling by the scaler chip is required for displaying image signals having a resolution different from that of the fixed-resolution display device or for displaying image signals with various resolutions depending on the types of the broadcasting signals. At this time, the images displayed by the display device may be dependent significantly on the performance of the scaler chip.

However, the scaling by the scaler chip may distort the image signals to deteriorate images on the display panel. For example, a HDTV having a resolution of 720 may distort the NTSC broadcasting signals having a resolution of 480. On the other hand, the distortion of the HD broadcasting signals having a resolution of 1080 in the HDTV may be relatively smaller. However, the down scaling may sacrifice the advantage of the image quality.

In addition, the scaler chip increases manufacturing cost.

### SUMMARY OF THE INVENTION

A display device is provided, which includes: a signal controller that selectively renders input image signals from an external device depending on a characteristic of the input image signals; a data driver generating data signals corresponding to the rendered image signals; and a display panel displaying images based on the data signals and including a plurality of pixels that are arranged in a matrix.

The characteristic of the input image signals may includes a resolution, particularly, a vertical resolution.

The signal controller may render the input image signals when the vertical resolution of the input image signals is equal to or larger than a predetermined value and it may not render the input image signals when the vertical resolution of the input image signals is smaller than the predetermined value.

The display panel may display images on two rows of the pixels corresponding to a group of the input image signals for on row.

The vertical resolution may be determined by counting the number of pulses contained in a data enable signal (DE) or a horizontal synchronization signal (Hsync) inputted into the signal controller during one frame.

The number of the rows of the pixels may be equal to about 900-1,300.

Each of the pixels represents one of three primary colors including red, green, and blue or one of four colors including red, green, blue, and white

The pixels form a plurality of dots and each dot may include a pair of blue pixels or a pair of blue and white pixels arranged in a column, a pair of red pixels obliquely facing each other, and a pair of green pixels obliquely facing each other.

Each pixel may include a switching element.

The display device may include one of a liquid crystal display, a plasma display panel, and an organic light emitting display.

The resolution of the display device may be fixed.

A method of driving a display device including a plurality of pixels arranged in a matrix is provided, which includes: receiving image signals; selectively rendering the image signals depending on a characteristic of the image signals; converting the selectively rendered image signals into data signals; and applying the data signals to the pixels.

The characteristic of the input image signals may include a vertical resolution.

The selective rendering may render the image signals when the vertical resolution of the image signals is equal to or larger than a predetermined value and it may not render the image signals when the vertical resolution of the image signals is smaller than the predetermined value.

The selective rendering may include: counting the number of pulses contained in an input data enable signal (DE) or an input horizontal synchronization signal (Hsync) during one frame.

The application of the data signals may apply the data signals corresponding to un-rendered image signals twice.

### BRIEF DESCRIPTION OF THE DRAWINGS

The present invention will become more apparent by describing embodiments thereof in detail with reference to the accompanying drawings in which:
Fig. 1 is a block diagram of an LCD according to an embodiment of the present invention;
Fig. 2 is an equivalent circuit diagram of a pixel of an LCD according to an embodiment of the present invention;
Fig. 3 is a block diagram of a conventional TV;
Fig. 4A illustrates a three color pixel arrangement according to an embodiment of the present invention;
Fig. 4B illustrates a four color pixel arrangement according to an embodiment of the present invention;
Fig. 5 illustrates a liquid crystal display panel according to an embodiment of the present invention; and
Fig. 6 is a graph showing a relation between a range of vision and an effective PPI.

### DETAILED DESCRIPTION OF THE PREFERRED EMBODIMENTS

The present invention now will be described in more detail hereinafter with reference to the accompanying drawings, in which preferred embodiments of the invention are shown. This invention may, however, be embodied in many different forms and should not be construed as limited to the embodiments set forth herein.

In the drawings, the thickness of layers and regions are exaggerated for clarity. Like numerals refer to like elements throughout. It will be understood that when an element such as a layer, region or substrate is referred to as being "on" another element, it can be directly on the other element or intervening elements may also be present. In contrast, when an element is referred to as being directly on" another element, there are no intervening elements present.

Now, display devices including liquid crystal displays and driving methods thereof according to embodiments of the present invention will be described in detail with reference to the accompanying drawings.

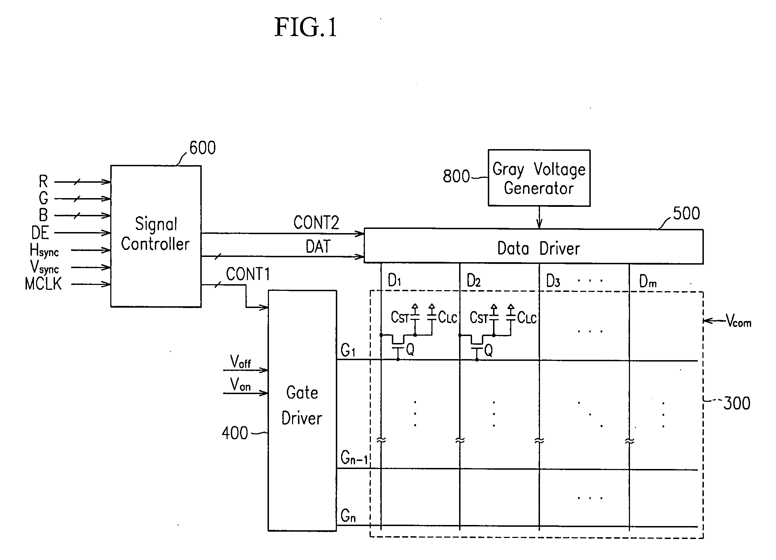

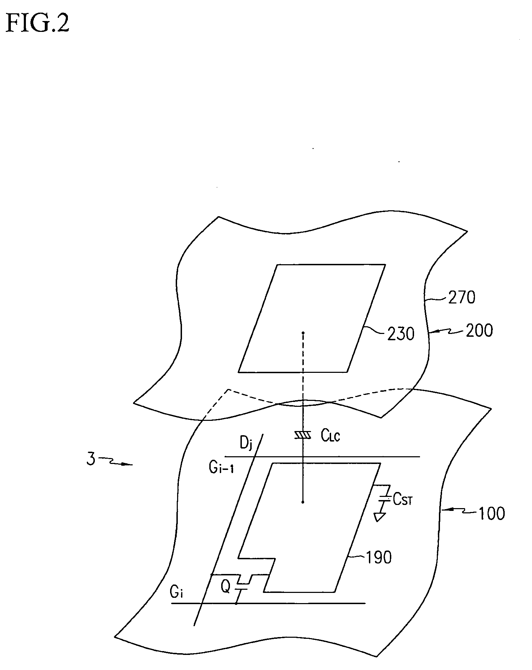

An LCD as an example of display device according to an embodiment of the present invention will be described in detail with reference to Figs. 1 and 2.

Fig. 1 is a block diagram of an LCD according to an embodiment of the present invention, and Fig. 2 is an equivalent circuit diagram of a pixel of an LCD according to an embodiment of the present invention.

Referring to Fig. 1, an LCD according to an embodiment includes a LC panel assembly 300, a gate driver 400 and a data driver 500 that are connected to the panel assembly 300, a gray voltage generator 800 connected to the data driver 500, and a signal controller 600 controlling the above elements.

In circuital view shown in Fig. 1, the panel assembly 300 includes a plurality of display signal lines G₁-Gₙ and D₁-Dₘ and a plurality of pixels connected thereto and arranged substantially in a matrix. In structural view shown in Fig. 2, the panel assembly 300 includes lower and upper panels 100 and 200 facing each other and a liquid crystal (LC) layer 3 interposed between the lower panel 200 and the upper panel 200.

The display signal lines G₁-Gₙ and D₁-Dₘ include a plurality of gate lines G₁-Gₙ transmitting gate signals (also referred to as "scanning signals"), and a plurality of data lines D₁-Dₘ transmitting data signals. The gate lines G₁-Gₙ extend substantially in a row direction and substantially parallel to each other, while the data lines D₁-Dₘ extend substantially in a column direction and substantially parallel to each other.

Each pixel includes a switching element Q connected to the signal lines G₁-Gₙ and D₁-Dₘ, and a LC capacitor C_{LC} and a storage capacitor C_{ST} that are connected to the switching element Q. The storage capacitor C_{ST} may be omitted if unnecessary.

The switching element Q including a thin film transistor (TFT) is provided on a lower panel 100 and it has three terminals: a control terminal connected to one of the gate lines G₁-Gₙ; an input terminal connected to one of the data lines D₁-Dₘ; and an output terminal connected to both the LC capacitor C_{LC} and the storage capacitor C_{ST}.

The LC capacitor C_{LC} includes a pixel electrode 190 provided on the lower panel 100 and a common electrode 270 provided on an upper panel 200 as two terminals. The LC layer 3 disposed between the two electrodes 190 and 270 functions as dielectric of the LC capacitor C_{LC}. The pixel electrode 190 is connected to the switching element Q and the common electrode 270 is connected to the common voltage Vcom and covers entire surface of the upper panel 200. Unlike Fig. 2, the common electrode 270 may be provided on the lower panel 100, and at least one of the electrodes 190 and 270 may have a shape of bar or stripe.

The storage capacitor C_{ST}, which is an auxiliary capacitor of the LC capacitor, is defined by the overlap of the pixel electrode 190 and a separate wire (not shown) with an insulator interposed therebetween. The separate wire is provided on the lower panel 100 and applied with a predetermined voltage such as the common voltage Vcom. Otherwise, the storage capacitor is defined by the overlap of the pixel electrode 190 and its previous gate line Gᵢ₋₁ via an insulator.

For color display, each pixel uniquely represents one of three primary colors (i.e., spatial division) or each pixel represents three primary colors in turn (i.e., time division) such that spatial or temporal sum of the three primary colors are recognized as a desired color. Fig. 2 shows an example of the spatial division that each pixel is provided with one of a plurality of red, green and blue color filters 230 in an area of the upper panel 200 facing the pixel electrode 190. Alternatively, the color filters 230 are provided on or under the pixel electrode 190 on the lower panel 100.

One or more polarizers (not shown) are attached to at least one of the panels 100 and 200 to polarize the light.

Referring to Fig. 1 again, the gray voltage generator 800 generates two sets of a plurality of gray voltages related to the transmittance of the pixels. The gray voltages in one set have a positive polarity with respect to the common voltage Vcom, while those in the other set have a negative polarity with respect to the common voltage Vcom.

The gate driver 400 is connected to the gate lines G₁-Gₙ of the panel assembly 300 and applies gate signals from an external device to the gate lines G₁-Gₙ. The gate signal is a combination of a gate-on voltage Von and a gate-off voltage Voff.

The data driver 500 is connected to the data lines D₁-Dₘ of the panel assembly 300 and selects gray voltages from the gray voltage generator 800 to apply as data signals to the data lines D₁-Dₘ.

The gate driver 400 or the data driver 400 may include a plurality of driver integrated circuit (IC) chips that are mounted directly on the panel assembly 300 or mounted on flexible printed circuit films to form tape carrier packages attached to the panel assembly 300. Alternatively, the gate driver 400 or the data driver 500 may be integrated into the panel assembly 300.

The signal controller 600 controls the gate driver 400, the data driver 500, and so on.

Next, the operation of the LCD will be described in detail.

The signal controller 600 is supplied from an external graphic controller (not shown) with input image signals R, G and B and input control signals controlling the display thereof, for example, a vertical synchronization signal Vsync, a horizontal synchronization signal Hsync, a main clock signal MCLK, a data enable signal DE, etc. The signal controller 600 processes the input image signals R, G and B based on the operating condition of the panel assembly 300 and provides the processed image signals DAT for the data driver 500. Moreover, the signal controller 600 generates a plurality of gate control signals CONT1 and data control signals CONT2 on the basis of the input image signals and the input control signals and it provides the gate control signals CONT1 for the gate driver 400 and the data control signals CONT2 for the data driver 500.

The gate control signals CONT1 include a scanning start signal STV for instructing to start the scanning of the gate-on voltage Von and at least a clock signal for controlling the output timing of the gate-on voltage Von. The gate control signals CONT1 may further include an output enable signal OE for determining the duration of the gate-on voltage Von.

The data control signals CONT2 include a horizontal synchronization start signal STH for informing of data transmission for a pixel row, a load signal LOAD or TP for instructing to apply the data voltages to the data lines D₁-Dₘ, an inversion control signal RVS for reversing the polarity of the data voltages (with respect to the common voltage Vcom), and a data clock signal HCLK.

The data driver 500 receives a packet of the image data DAT for a pixel row from the signal controller 600. The data driver 500 converts the image data DAT into analog data voltages selected from the gray voltages from the gray voltage generator 800 and applies the data voltages to the data lines D₁-Dₘ in response to the data control signals CONT2 from the signal controller 600.

Responsive to the gate control signals CONT1 from the signal controller 600, the gate driver 400 applies the gate-on voltage Von to the gate line G₁-Gₙ, thereby turning on the switching elements Q connected thereto. The data voltages applied to the data lines D₁-Dₘ are supplied to the corresponding pixels via the turned-on switching elements Q.

By repeating this procedure by a unit of a horizontal period (which is also denoted by "1H" and equal to one periods of the horizontal synchronization signal Hsync and the data enable signal DE), all gate lines G₁-Gₙ are sequentially supplied with the gate-on voltage Von during a frame, thereby applying the data voltages to all pixels. When the next frame starts after finishing one frame, the inversion control signal RVS applied to the data driver 500 is controlled such that the polarity of the data voltages is reversed (which is called "frame inversion"). The inversion control signal RVS may be also controlled such that the polarity of the data voltages flowing through a data line in one frame are reversed (e.g., line inversion and dot inversion), or the polarity of the data voltages in one packet are reversed (e.g., column inversion and dot inversion).

In the meantime, broadcasting signals used for TV are classified into several types.

The broadcasting signals are classified into analog type and digital type based on the modulation scheme, and, based on the transmission types, the analog type broadcasting signals are classified into NTSC (National Television Standards Committee), PAL (Phase Alternation by Line), and SECAM (Sequential Color with Memory), while the digital broadcasting signals are classified into SD (Standard Definition) and HD (High Definition).

Alternatively, the broadcasting signals are classified into interlaced type and progressive type based on the scanning scheme. In this case, the broadcasting signals are further classified into 480i, 480p, 720p, 1080i, etc, based on the resolution, where the number indicates a vertical resolution and the character is indicative of interlaced type or progressive type. For example, NTSC broadcasting signals are represented as 480i that means interlaced broadcasting signals with a vertical resolution equal to 480, SD broadcasting signals are represented as 480p that means progressive broadcasting signals with a vertical resolution of 480, and HD broadcasting signals are represented as 1080i that means interlaced broadcasting signals with a vertical resolution equal to 1080.

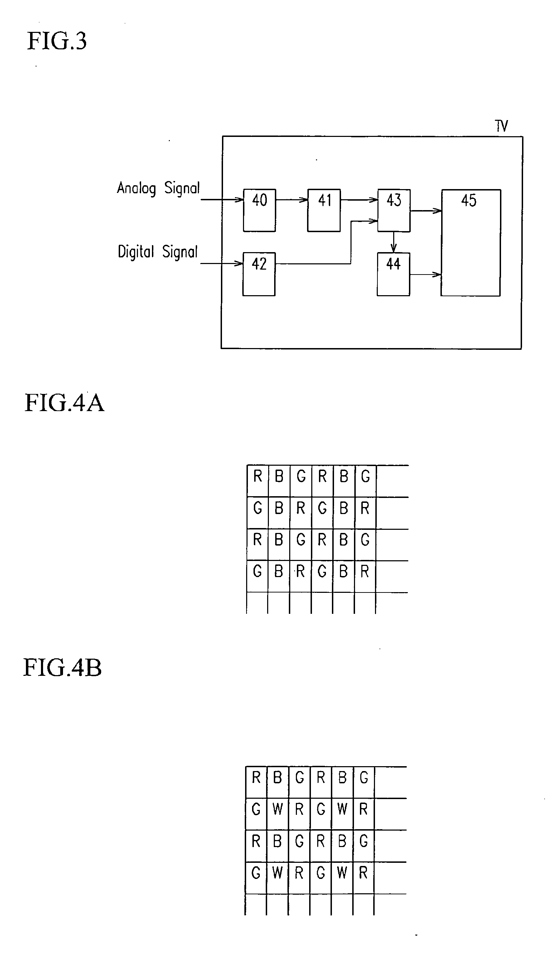

A conventional TV including a display device for converting the broadcasting signals into images is described with reference to Fig. 3.

Fig. 3 is a block diagram of a conventional TV.

Referring to Fig. 3, a conventional LCD TV includes a TV tuner 40, a video decoder 41, a digital tuner 42, a signal processor 43, a scaler 44, and a display device 45 including an LCD, a plasma display panel (PDP), an organic light emitting display (OLED), etc.

Upon receipt of analog broadcasting signals through a TV antennal (not shown), etc., the TV tuner 40 transmits the broadcasting signals to the video decoder 41 that converts the analog broadcasting signals into digital broadcasting signals. Alternatively, upon receipt of digital broadcasting signals through the TV antenna, the digital tuner 42 decodes the digital broadcasting signals. The video decoder 41 or the digital tuner 42 transmits the broadcasting signals to the signal processor 43.

The signal processor 43 outputs control signals among the input signals to the scaler 44 and the display device 45 and converts interlaced-type image signals into progressive-type image signals. The progressive-type image signals, which are inputted into the scaler 44, adjusted to be suitable for the size of the display device 45 by the scaler 44 according to control signals supplied from the signal processor 43 and outputted to the display device 45. The display device 45 displays images on a display panel based on control signals supplied from the signal processor 43 and the image signals from the scaler 44.

The TV adjust the input image signals to be suitable for the display panel using the scaler 44. However, the scaling by the scaler 44 may distort the image signals to deteriorate image quality.

Now, the operation of the LCD shown in Fig. 1 without using a scaler is described in detail.

Referring to Fig. 1 again, the signal controller 600 receives unscaled image signals R, G and B from an external device and renders the unscaled image signals R, G and B based on characteristics of the image signals.

The characteristics of the image signals include resolution, vertical frequency, horizontal frequency, aspect ratio (e.g. 16:9 or 4:3), etc. The rendering of the signal controller 600 is performed preferably based on the resolution, particularly on the vertical resolution. The signal controller 600 determines the vertical resolution by counting the pulses of the data enable signal DE or the horizontal synchronization signal Hsync during one frame. Alternatively, the signal controller 600 may receive information of the resolution from an external device.

After the signal controller 600 compares the vertical resolution of the input image signals with a predetermined value, it renders the image signals R, G and B when the vertical resolution is equal to or larger than the predetermined value, and if not, it may not perform rendering.

The rendering includes adjustment of the resolution of the image signals R, G and B to be suitable for the resolution of the display panel, which may correspond to scaling. The number of the pixel rows may be equal to about 900-1,300.

Without the rendering, the signal controller 600 outputs a packet of the image signals DAT twice such that the panel assembly 300 displays the image represented by the packet of the image signals DAT on two rows.

For example, it is assumed that the input image signals R, G and B are either of analog NTSC 480i broadcasting signals and HD 1080i broadcasting signals and the number of rows in the panel assembly 300 is 960. The predetermined value may be one selected from the numbers between 480 and 1080, for example, 650.

When the vertical resolution of the input image signals R, G and B is equal to 480, the signal controller 600 does not render the input image signals R, G and B. Then, the panel assembly 300 displays 480-resolution images onto a 960-resolution display panel by displaying images for a pixel row in two rows in the display panel.

When the vertical resolution of the input image signals R, G and B is equal to 1080, the signal controller 600 renders the input image signals R, G and B with a vertical resolution of 1080 to have a vertical resolution of 960. This corresponds to a 9:8 scaling.

Arrangements of the pixels according to embodiments of the present invention will be described with reference to Figs. 4A and 4B.

Fig. 4A illustrates a three color pixel arrangement according to an embodiment of the present invention and Fig. 4B illustrates a four color pixel arrangement according to an embodiment of the present invention.

Referring to Figs. 4A, a dot includes six pixels forming a 2×3 matrix and representing three primary colors such as red (R), green (G), and blue (B). However, the three primary colors may include cyan (C), magenta (M), and yellow (Y) or other combinations. In detail, the six pixels include a pair of blue pixels arranged in a column, a pair of red pixels obliquely facing each other, and a pair of green pixels obliquely facing each other.

Referring to Figs. 4B, a dot includes six pixels forming a 2×3 matrix and representing four colors that include three primary colors such as red (R), green (G), and blue (B) and a white color. The three primary colors may also include cyan (C), magenta (M), and yellow (Y) or other combinations. In detail, the six pixels include a pair of blue and white pixels arranged in a column, a pair of red pixels obliquely facing each other, and a pair of green pixels obliquely facing each other.

The arrangement of the pixels shown in Figs. 4A and 4B is called a PenTile arrangement. However, the arrangements of the pixels may be one of a stripe arrangement, a mosaic arrangement, or a delta (triad) arrangement.

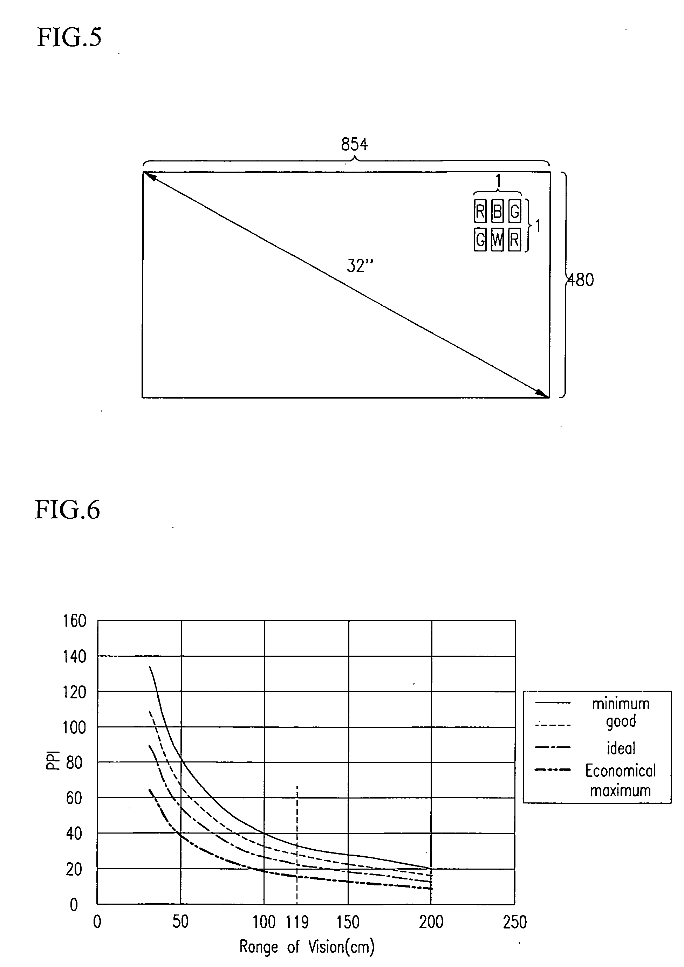

Now, a relation between a range of vision and an effective PPI (pixel per inch) is described with reference to Figs. 5 and 6.

Fig. 5 illustrates a liquid crystal display panel according to an embodiment of the present invention and Fig. 6 is a graph showing a relation between a range of vision and an effective PPI.

The display panel shown in Fig. 5 is a PenTile arrangement four color display panel and the resolution of the display panel is equal to 854×480 square dots or 2562×960 square pixels. When the diagonal of the display panel is equal to 32 inches, the PPI of the display panel is equal to 30.6 and the optimal viewing distance is about three time the height of the display panel, i.e., equal to about 1.19m.

Referring to Fig. 6 and TABLE 1 illustrated below, minimum, good, ideal, and economical maximum effective PPIs are equal to 16.3, 22.6, 27.6, and 33.9, respectively, when the range of vision is equal to 1.19m. In addition, a sub-pixel rendering maximum PPI with rendering is equal to about 49 when the range of vision is equal to 1.19m. The above-described effective PPI equal to 30.6 is disposed between the ideal PPI and the economical maximum PPI and thus the rendering on the LCD according to this embodiment is considered to be effective.

**TABLE 1**

| 32" TV | Minimum | Good | Ideal | Economical MAX | Sub-pixel rendering MAX |
|---|---|---|---|---|---|
| PPI limit | 16.3 | 22.6 | 27.6 | 33.9 | 49 |

Accordingly, the display device according to the present invention removes distortion of the image signals by rendering the image signals depending on the vertical resolution thereof without a scaler. The omission of the scaler reduces production cost.

The above-described LCD can be substituted with another display device such as PDP or OLED.

Although preferred embodiments of the present invention have been described in detail hereinabove, it should be clearly understood that many variations and/or modifications of the basic inventive concepts herein taught which may appear to those skilled in the present art will still fall within the spirit and scope of the present invention, as defined in the appended claims.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A display device, comprising:
a signal controller that selectively renders input image signals from an external device depending on a characteristic of the input image signals;
a data driver generating data signals corresponding to the rendered image signals; and
a display panel displaying images based on the data signals and including a plurality of pixels that are arranged in a matrix.

2. The display device of claim 1, wherein the characteristic of the input image signals includes a resolution.

3. The display device of claim 1, wherein the characteristic of the input image signals includes a vertical resolution.

4. The display device of claim 3, wherein the signal controller renders the input image signals when the vertical resolution of the input image signals is equal to or larger than a predetermined value and does not render the input image signals when the vertical resolution of the input image signals is smaller than the predetermined value.

5. The display device of claim 4, wherein the display panel displays images on two rows of the pixels corresponding to a group of the input image signals for on row.

6. The display device of claim 5, wherein the vertical resolution is determined by counting the number of pulses contained in a data enable signal (DE) or a horizontal synchronization signal (Hsync) inputted into the signal controller during one frame.

7. The display device of claim 5, wherein the number of the rows of the pixels is equal to about 900-1,300.

8. The display device of claim 5, wherein each of the pixels represents one of three primary colors.

9. The display device of claim 8, wherein the three primary colors include red, green, and blue.

10. The display device of claim 9, wherein the pixels form a plurality of dots and each dot includes a pair of blue pixels arranged in a column, a pair of red pixels obliquely facing each other, and a pair of green pixels obliquely facing each other.

11. The display device of claim 5, wherein each of the pixels represents one of four colors.

12. The display device of claim 11, wherein the four colors include red, green, blue, and white.

13. The display device of claim 12, wherein the pixels form a plurality of dots and each dot includes a pair of blue and white pixels arranged in a column, a pair of red pixels obliquely facing each other, and a pair of green pixels obliquely facing each other.

14. The display device of claim 1, wherein each pixel comprises a switching element.

15. The display device of claim 1, wherein the display device comprises one of a liquid crystal display, a plasma display panel, and an organic light emitting display.

16. The display device of claim 1, wherein the resolution of the display device is fixed.

17. A method of driving a display device including a plurality of pixels arranged in a matrix, the method comprising:
receiving image signals;
selectively rendering the image signals depending on a characteristic of the image signals;
converting the selectively rendered image signals into data signals; and
applying the data signals to the pixels.

18. The method of claim 17, wherein the characteristic of the input image signals includes a vertical resolution.

19. The method of claim 18, wherein the selective rendering renders the image signals when the vertical resolution of the image signals is equal to or larger than a predetermined value and does not render the image signals when the vertical resolution of the image signals is smaller than the predetermined value.

20. The method of claim 19, wherein the selective rendering comprises:
counting the number of pulses contained in an input data enable signal (DE) or an input horizontal synchronization signal (Hsync) during one frame.

21. The method of claim 20, wherein the application of the data signals applies the data signals corresponding to un-rendered image signals twice.
